# EUROPÄISCHE PATENTSCHRIFT

(11) **EP 3 096 054 B1**
(45) Veröffentlichungstag und Bekanntmachung des Hinweises auf die Patenterteilung: **11.04.2018**
(21) Anmeldenummer: 16168298.4
(22) Anmeldetag: 04.05.2016
(51) Int. Cl.: F16K 31/122

(54) **VENTILANTRIEB**
VALVE ACTUATOR
ACTIONNEUR DE VANNE

(30) Priorität: 19.05.2015 DE 102015209083
(43) Veröffentlichungstag der Anmeldung: 23.11.2016
(73) Patentinhaber: Gemü Gebr. Müller Apparatebau GmbH & Co. Kommanditgesellschaft, 74653 Ingelfingen (DE)
(72) Erfinder: Hiller, Martin, 74906 Bad Rappenau (DE)
(74) Vertreter: DREISS Patentanwälte PartG mbB

(56) Entgegenhaltungen:
- EP-A1- 1 505 325
- DE-A1- 19 641 073
- US-A1- 2005 139 061

## Beschreibung

Die Erfindung betrifft einen Ventilantrieb nach dem Oberbegriff des Anspruchs 1.

Derartige Ventilantriebe sind generell im Stand der Technik bekannt. Aufgabe der vorliegenden Erfindung ist es, ein Ventil zu schaffen, welches platzsparend baut, Flexibilität bei der Platzierung von Betätigungsmittelanschlüssen bietet und zuverlässig arbeitet.

Die DE 196 41 073 A1 beschreibt ein druckmittelbetätigbares Ventil mit zwei ineinander schraubbaren Gehäuseteilen.

Die EP 1 505 325 A1 beschreibt einen pneumatischen Ventilantrieb mit Außenwandteilen, die miteinander verschraubt sind.

Die US 2005/0139061 A1 beschreibt ein Gehäuse für ein Betätigungsglied eines Kolbens.

Diese Aufgabe wird durch ein Ventil mit den Merkmalen des Anspruchs 1 gelöst. Vorteilhafte Weiterbildungen der Erfindung sind in den Unteransprüchen genannt. Außerdem finden sich für die Erfindung wichtige Merkmale in der nachfolgenden Beschreibung und in der Zeichnung, wobei diese Merkmale sowohl in Alleinstellung als auch in unterschiedlicher Kombination für die Erfindung wichtig sein können.
Erfindungsgemäß ist mindestens ein erster Abschnitt des Betätigungsmittelkanals in dem Kontaktbereich zwischen dem ersten Gehäuseteil und dem zweiten Gehäuseteil angeordnet, was eine vorteilhafte, da platzsparende Anordnung des Betätigungsmittelkanals darstellt. Der Betätigungsmittelkanal ist so auch vor mechanischen Beschädigungen geschützt, wie sie beispielsweise bei der Verwendung von Kunststoffleitungen auftreten können. Als Betätigungsmittel kommt beispielsweise Druckluft in Frage.

Um den ersten Abschnitt des Betätigungsmittelkanals ist außerdem ein, vorzugsweise linienartig ausgebildeter, Dichtbereich angeordnet, in welchem das erste Gehäuseteil und das zweite Gehäuseteil fluiddicht und stoffschlüssig, insbesondere durch eine Laserschweißnaht, miteinander verbunden sind. Eine fluiddichte Verbindung in diesem Sinne kann beispielsweise auch durch eine entsprechende Vercrimpung des ersten Gehäuseteils mit dem zweiten Gehäuseteil erreicht werden. Eine stoffschlüssige Verbindung dichtet den ersten Abschnitt des Betätigungsmittelkanals zuverlässig ab und ist überdies nicht anfällig für Alterungserscheinungen. Eine stoffschlüssige Verbindung durch eine Laserschweißnaht ist vorteilhaft, da sie automatisiert und mit hoher Präzision herstellbar und darüber hinaus preiswert ist.

Vorteilhafter Weise ist das zweite Gehäuseteil wenigstens bereichsweise in einer radialen Richtung gesehen um das erste Gehäuseteil herum angeordnet. Insbesondere ist es dabei vorteilhaft, wenn das erste und/oder das zweite Gehäuseteil rohrartig ausgebildet sind/ist, so kann das zweite Gehäuseteil beim Zusammenbau des Ventilantriebs quasi über oder in das erste Gehäuseteil geschoben werden.

Bevorzugt ist auch, wenn das erste Gehäuseteil und/oder das zweite Gehäuseteil eine Ausnehmung, in welcher der erste Abschnitt des Betätigungsmittelkanals wenigstens bereichsweise verläuft, aufweist bzw. aufweisen. Dabei ist es vorteilhaft, wenn die Ausnehmung zumindest auch durch ein zerspanendes Abtragen von Material hergestellt ist, weil hierdurch präzise Konturen realisiert werden können. Von Vorteil ist auch, wenn die erste Ausnehmung zumindest auch durch ein plastisches Verformen von Material hergestellt ist, was sehr einfach und ohne Schwächung der Wandstärke möglich ist. Ein derartiger Betätigungsmittelkanal ist bezüglich seiner Geometrie präzise definiert und ist zudem kostengünstig herstellbar.

Gemäß einer Ausführungsform ist ein zweiter Abschnitt des Betätigungsmittelkanals in dem ersten Gehäuseteil oder in dem zweiten Gehäuseteil angeordnet. Anders ausgedrückt, ist der zweite Abschnitt des Betätigungsmittelkanals innerhalb des Materials des ersten Gehäuseteils bzw. des zweiten Gehäuseteils angeordnet. Über den derart ausgebildeten zweiten Abschnitt des Betätigungsmittelkanals kann der erste Abschnitt des Betätigungsmittelkanals in einfacher und robuster Weise mit dem Rest des Betätigungsmittelkanals verbunden werden.

In einer Ausführung des Ventilantriebs verläuft ein zweiter Abschnitt des Betätigungsmittelkanals, vorzugsweise in direktem Anschluss an den ersten Abschnitt des Betätigungsmittelkanals, bereichsweise in radialer Richtung. Dies ist einfach und preiswert beispielsweise durch Bohren in radialer Richtung realisierbar. Durch die radiale Richtung kann ein besonders gut den Anforderungen genügender dreidimensionaler Verlauf des Betätigungsmittelkanals erreicht werden.
Vorzugsweise weist der Ventilantrieb einen weiteren Betätigungsmittelkanal auf, der mit einem weiteren Kolbendruckraum fluidisch verbunden ist, wobei der Kolbendruckraum dem Kolben mit einer Wirkrichtung zugeordnet und der weitere Kolbendruckraum dem Kolben mit einer weiteren Wirkrichtung zugeordnet ist, die der Wirkrichtung entgegengesetzt ist. Dabei ist besonders bevorzugt, wenn ein Abschnitt des weiteren Betätigungsmittelkanals in dem Kontaktbereich zwischen dem ersten Gehäuseteil und dem zweiten Gehäuseteil angeordnet ist. Vorteilhafter Weise ist dabei um den Abschnitt des weiteren Betätigungsmittelkanals ein Dichtbereich angeordnet, in welchem das erste Gehäuseteil und das zweite Gehäuseteil fluiddicht, vorzugsweise stoffschlüssig, insbesondere durch eine Laserschweißnaht, miteinander verbunden sind. Die Vorzüge einer derartigen Ausführung sind bereits weiter oben im Zusammenhang mit dem Abschnitt des Betätigungsmittelkanals beschrieben. Die oben genannte Anordnung von zwei Kolbendruckräumen schafft einen doppelt wirkenden Ventilantrieb, so dass auf eine Ventilfeder verzichtet werden kann. Mit dem erfindungsgemäß ausgestalteten Betätigungsmittelkanal bzw. den erfindungsgemäß ausgestalteten Betätigungsmittelkanälen wird dabei ein an die geometrischen Anforderungen optimal angepasster, preiswert herstellbarer, jederzeit fluiddichter Betätigungsmittelkanal möglich.
Vorteilhaft ist auch, wenn - insbesondere bei einem einfach wirkenden Kolben - der Kolben durch eine Feder in eine Ausgangsposition vorgespannt ist. Beispielsweise kann der Kolben derart in eine Ausgangsposition vorgespannt sein, dass das Ventil in einer Grundstellung geschlossen ist, das heißt das das Ventil nur öffnet, sofern der Kolben mit Druck beaufschlagt ist. Hierdurch wird die Sicherheit im Betrieb des Ventilantriebs bzw. des an diesen angeschlossenen Ventils verbessert.

Von Vorteil ist auch, wenn eine Anschlussvorrichtung derart an dem Ventilantrieb ausbildet und angeordnet ist, dass ein im Wesentlichen baugleicher zweiter Ventilantrieb mit einem zweiten Kolben mit dem Ventilantrieb derart verbindbar ist, dass der Kolben und der zweite Kolben kinematisch verbunden sind. Auf diese Weise kann ein Ventil mit einer schlanken Bauform geschaffen werden, da der Kolben und der zweite Kolben zusammenwirken und ihre Flächen und Kräfte hierdurch quasi addiert werden können. Es lassen sich also bei schlanker Bauform hohe Schaltkräfte des Ventilantriebs verwirklichen. Gegebenenfalls können auch noch weitere Ventilantriebe kaskadenartig miteinander gekoppelt werden, wodurch besonders hohe Betätigungskräfte bei gleichzeitig sehr schlanker Bauform realisiert werden können.

Dabei ist es besonders vorteilhaft, wenn jeweils ein eingehender Betätigungsmittelanschluss und ein abgehender Betätigungsmittelanschluss vorgesehen und derart angeordnet sind, dass ein abgehender Betätigungsmittelanschluss des im Wesentlichen baugleichen zweiten Ventilantriebs mit dem eingehenden Betätigungsmittelanschluss des Ventilantriebs fluidisch verbunden ist, wenn der Ventilantrieb und der zweite Ventilantrieb miteinander verbunden sind. Bevorzugt ist auch, wenn der Kolben und der zweite Kolben derart ausgebildet sind, dass sie über eine Verbindungsspindel miteinander verbindbar sind.

Nachfolgend wird die Erfindung anhand der beiliegenden Zeichnung erläutert. In dieser zeigen:
- Figur 1: eine Schnittdarstellung eines Ventil mit erfindungsgemäßem Ventilantrieb;
- Figur 2: eine vergrößerte Darstellung eines Teilbereichs aus Figur 1 um einen Abschnitt eines Betätigungsmittelkanals;
- Figur 3: eine schematische Einzeldarstellung des Abschnitts des Betätigungsmittelkanals aus Figur 2; und
- Figuren 4-6: schematische Darstellungen alternativer Ausführungsformen des Abschnitts des Betätigungsmittelkanals aus Figur 3.

In den verschiedenen Figuren der Zeichnung sind einander entsprechende Bauteile, Elemente und Bereiche mit gleichen Bezugszeichen versehen.

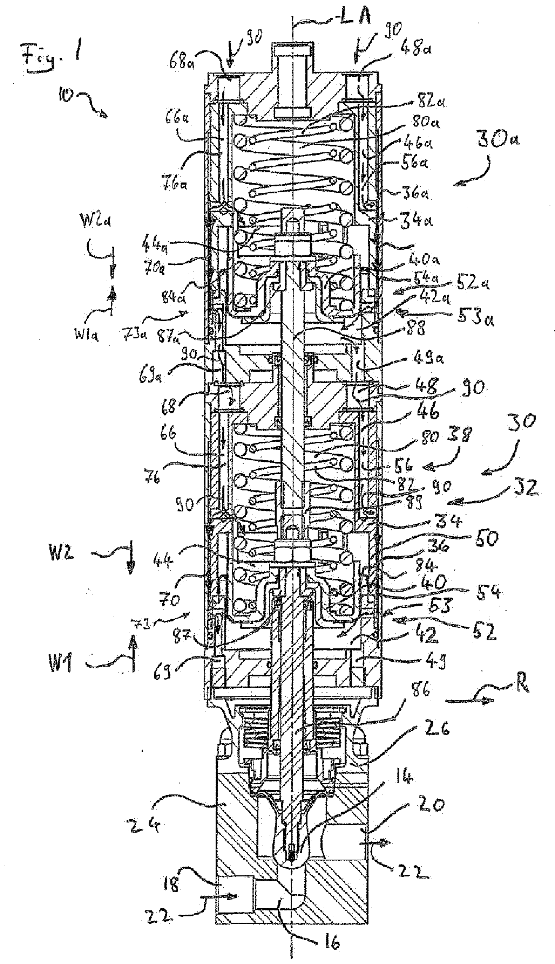

Ein Ventil trägt in Figur 1 insgesamt das Bezugszeichen 10. Das Ventil 10 erstreckt sich entlang einer Längsachse LA. Ein Sperrelement 14 in Form einer Ventilmembran ist in einem Medienkanal 16 angeordnet. Der Medienkanal 16 umfasst einen eingehenden Medienanschluss 18 und einen abgehenden Medienanschluss 20 und einen bei geschlossenem Ventil 10 mit der Ventilmembran 14 kooperierenden Ventilsitz. Eine Strömungsrichtung eines strömbaren Mediums, welches über das Ventil 10 schaltbar ist, ist durch Pfeile mit dem Bezugszeichen 22 dargestellt. Der Medienkanal 16 mit dem eingehenden Medienanschluss 18 und dem abgehenden Medienanschluss 20 ist in einem Medienblock 24 angeordnet. Der Medienblock 24 ist über ein Verbindungsstück 26 mit einem vorliegend pneumatischen Ventilantrieb 30 verbunden.

Auf einer dem Medienblock 24 gegenüberliegenden Seite ist der Ventilantrieb 30 mit einem zweiten Ventilantrieb 30a verbunden.

Der Ventilantrieb 30 und der zweite Ventilantrieb 30a sind im Wesentlichen baugleich. Im Folgenden wird der Aufbau des Ventilantriebs 30 und des zweiten Ventilantriebs 30a beschrieben, wobei die Ausführungen anhand des Ventilantriebs 30 gemacht werden. Diese Ausführungen gelten dabei entsprechend analog für den zweiten Ventilantrieb 30a, die entsprechenden Bauteile des zweiten Ventilantriebs 30a sind in Figur 1 durch Bezugszeichen mit dem Zusatz "a" dargestellt und werden nicht gesondert eingeführt.

Der Ventilantrieb umfasst ein zylindrisches Gehäuse 32, welches wiederum ein erstes zylindrisches und radial inneres Gehäuseteil 34 und ein zweites zylindrisches und radial äußeres Gehäuseteil 36 umfasst. Das zweite Gehäuseteil 36 liegt in einem Kontaktbereich 38 an dem ersten Gehäuseteil 34 an. In der gezeigten Ausführungsform ist das zweite Gehäuseteil 36 in einer radialen Richtung R gesehen also um das erste Gehäuseteil 34 herum angeordnet.

In dem Gehäuse 32 ist ein Kolben 40 angeordnet. Dem Kolben 40 ist jeweils ein Kolbendruckraum 42 und ein weiterer Kolbendruckraum 44 zugeordnet. Der Kolbendruckraum 42 ist dem Kolben 40 mit einer Wirkrichtung W1 zugeordnet. Der weitere Kolbendruckraum 44 ist dem Kolben 40 mit einer weiteren Wirkrichtung W2 zugeordnet. Die weitere Wirkrichtung W2 ist der Wirkrichtung W1 entgegengesetzt.

Der Kolbendruckraum 42 ist mit einem Betätigungsmittelkanal 46 verbunden. Der Betätigungsmittelkanal 46 erstreckt sich von einem eingehenden Betätigungsmittelanschluss 48 zum Kolbendruckraum 42. Von dem Kolbendruckraum 42 aus erstreckt sich der Betätigungsmittelkanal 46 weiter zu einem abgehenden Betätigungsmittelanschluss 49. Ein erster Abschnitt 50 des Betätigungsmittelkanals 46 ist in dem Kontaktbereich 32 zwischen dem ersten Gehäuseteil 34 und dem zweiten Gehäuseteil 36 angeordnet. Als Betätigungsmittel ist vorliegend Druckluft vorgesehen. In Frage kommen grundsätzlich aber auch andere gasförmige oder flüssige Betätigungsmittel.

Um den ersten Abschnitt 50 des Betätigungsmittelkanals 46 herum ist ein Dichtbereich 52 angeordnet. Der Dichtbereich 52 ist linienartig ausgebildet. In dem Dichtbereich 52 sind das erste Gehäuseteil 34 und das zweite Gehäuseteil 36 durch eine Laserschweißnaht 53 stoffschlüssig miteinander verbunden. Diese Ausführungsform ist jedoch nicht einschränkend zu verstehen, im Sinne der Erfindung sind vielmehr auch andere Arten einer Verbindung zwischen dem ersten Gehäuseteil 34 und dem zweiten Gehäuseteil 36.

Der erste Abschnitt 50 des Betätigungsmittelkanals 46 verläuft in einer Ausnehmung 54, welche in dem ersten Gehäuseteil 34 angeordnet ist. Die Ausnehmung 54 ist vorliegend in den ersten Gehäuseteil 34 eingefräst. Mit dem ersten Abschnitt 50 des Betätigungsmittelkanals 46 ist ein zweiter Abschnitt 56 des Betätigungsmittelkanals 46 fluidisch verbunden. Der zweite Abschnitt 56 des Betätigungsmittelkanals 46 ist in dem ersten Gehäuseteil 34 angeordnet. Der zweite Abschnitt 56 des Betätigungsmittelkanals 46 ist fluidisch mit dem eingehenden Betätigungsmittelanschluss 48 verbunden.

Der weitere Kolbendruckraum 44 ist mit einem weiteren Betätigungsmittelkanal 66 verbunden. Der Betätigungsmittelkanal 66 erstreckt sich von einem weiteren eingehenden Betätigungsmittelanschluss 68 zum weiteren Kolbendruckraum 44. Von dem weiteren Kolbendruckraum 44 aus erstreckt sich der weitere Betätigungsmittelkanal 66 zu einem weiteren abgehenden Betätigungsmittelanschluss 69. Ein erster Abschnitt 70 des weiteren Betätigungsmittelkanals 66 ist in dem Kontaktbereich 32 zwischen dem ersten Gehäuseteil 34 und dem zweiten Gehäuseteil 36 angeordnet.

Um den ersten Abschnitt 70 des weiteren Betätigungsmittelkanals 66 ist ein weiterer Dichtbereich 72 angeordnet. Der weitere Dichtbereich 72 ist linienartig ausgebildet. In dem weiteren Dichtbereich 72 sind das erste Gehäuseteil 34 und das zweite Gehäuseteil 36 durch eine weitere Laserschweißnaht 73 stoffschlüssig miteinander verbunden.

Der erste Abschnitt 70 des weiteren Betätigungsmittelkanals 66 verläuft in einer weiteren Ausnehmung 74, welche in dem ersten Gehäuseteil 34 angeordnet ist. Die weitere Ausnehmung 74 ist in den ersten Gehäuseteil 34 eingefräst. Mit dem ersten Abschnitt 70 des weiteren Betätigungsmittelkanals 66 ist ein zweiter Abschnitt 76 des weiteren Betätigungsmittelkanals 66 fluidisch verbunden.
Der zweite Abschnitt 76 des weiteren Betätigungsmittelkanals 66 ist in dem ersten Gehäuseteil 34 angeordnet. Der zweite Abschnitt 76 des weiteren Betätigungsmittelkanals 66 ist fluidisch mit dem weiteren eingehenden Betätigungsmittelanschluss 68 verbunden.

In dem Gehäuse 32 sind eine primäre Feder 80 und eine sekundäre Feder 82 angeordnet. Die primäre Feder 80 und die sekundäre Feder 82 spannen den Kolben 40 in die in Figur 1 gezeigte Position vor. Die Verwendung von zwei parallelen Federn erhöht die Gesamt-Federkraft, ohne dass die einzelnen Federn sehr steif und damit schwierig zu montieren sind.

Über eine Faltdichtung 84 ist der Kolben 40 fluiddicht mit dem Gehäuse 32 verbunden. Der Kolben 40 ist entlang der Längsachse LA beweglich in dem Gehäuse 32 gelagert, indem er über eine im Gehäuse 32 verschieblich gelagerte Sperrspindel 86 mit dem Sperrelement 14 verbunden ist. Die Sperrspindel 86 ist über ein erstes hülsenartiges Befestigungselement 87 an dem Kolben angebracht. Über eine Verbindungsspindel 88, die in Verlängerung zu der Sperrspindel 86, dieser also quasi gegenüberliegend angeordnet ist, ist der Kolben 40 mit dem zweiten Kolben 40a verbunden. Die Verbindungsspindel 88 ist über ein zweites hülsenförmiges Befestigungselement 89 mit der Sperrspindel 86 und somit zumindest mittelbar mit dem Kolben 40 verbunden.

Das Ventil 10 arbeitet wie folgt: In der in Figur 1 gezeigten Position sperrt das Sperrelement 14 den Medienkanal 16. Um das Ventil 10 zu schalten und den Medienkanal 16 zu öffnen, wird Betätigungsmittel, welches durch Pfeile mit den Bezugszeichen 90 dargestellt ist, unter Druck in den zweiten eingehenden Betätigungsmittelanschluss 48a eingebracht.

Von dem zweiten eingehenden Betätigungsmittelanschluss 48a aus strömt das Betätigungsmittel 90 durch den zusätzlichen Abschnitt 56a des zweiten Betätigungsmittelkanals 46a und in den ersten Abschnitt 50a des zweiten Betätigungsmittelkanals 46a. Von dem ersten Abschnitt 50a des zweiten Betätigungsmittelkanals 46a strömt das Betätigungsmittel 90 in den zweiten Kolbendruckraum 42a. Von dem zweiten Kolbendruckraum 42a aus strömt das Betätigungsmittel 90 weiter in den zweiten abgehenden Betätigungsmittelanschluss 49a.

Von dem zweiten abgehenden Betätigungsmittelanschluss 49a strömt das Betätigungsmittel 90 in den eingehenden Betätigungsmittelanschluss 48. Von dem eingehenden Betätigungsmittelanschluss 48 aus strömt das Betätigungsmittel 90 durch den zweiten Abschnitt 56 des Betätigungsmittelkanals 46 und in den ersten Abschnitt 50 des Betätigungsmittelkanals 46. Von dem ersten Abschnitt 50 des Betätigungsmittelkanals 46 strömt das Betätigungsmittel 90 in den Kolbendruckraum 42. Von dem Kolbendruckraum 42 aus strömt das Betätigungsmittel 90 weiter in den abgehenden Betätigungsmittelanschluss 49, welcher fluiddicht verschlossen ist.

Wenn der zweite Kolbendruckraum 42a und der Kolbendruckraum 42 mit Betätigungsmittel 90 beaufschlagt sind, wirkt der Druck des Betätigungsmittels 90 auf die Flächen des zweiten Kolbens 40a und des Kolbens 40. Übersteigt die Druckkraft, welche aufgrund des Drucks des Betätigungsmittels 90 auf die Flächen des zweiten Kolben 40a und des Kolbens 40 wirkt, die Federkraft, welche durch die primäre Feder 80 und die sekundäre Feder 82 auf den Kolben 40 und durch die zweite primäre Feder 80a und die zweite sekundäre Feder 82 auf den zweiten Kolben 40a wirkt, so bewegen sich der Kolben 40 und der zweite Kolben 40a entlang der Wirkrichtung W1. Entsprechend bewegt sich das Sperrelement 14 entlang der Längsachse LA in Wirkrichtung W1 und der Medienkanal 60 wird geöffnet.

Zum Sperren des Medienkanals 22 wird das Betätigungsmittel 90 unter Druck in den zweiten weiteren eingehenden Betätigungsmittelanschluss 68a eingebracht.

Von dem zweiten weiteren eingehenden Betätigungsmittelanschluss 68a aus strömt das Betätigungsmittel 90 durch den zweiten Abschnitt 76a des zweiten weiteren Betätigungsmittelkanals 66a und in den ersten Abschnitt 70a des zweiten weiteren Betätigungsmittelkanals 66a. Von dem ersten Abschnitt 70a des zweiten weiteren Betätigungsmittelkanals 66a strömt das Betätigungsmittel 90 in den zweiten weiteren Kolbendruckraum 44a. Von dem zweiten weiteren Kolbendruckraum 44a aus strömt das Betätigungsmittel 90 in den zweiten weiteren abgehenden Betätigungsmittelanschluss 69a.

Von dem zweiten weiteren abgehenden Betätigungsmittelanschluss 69a strömt das Betätigungsmittel 90 in den weiteren eingehenden Betätigungsmittelanschluss 68. Von dem weiteren eingehenden Betätigungsmittelanschluss 68 aus strömt das Betätigungsmittel 90 durch den weiteren zweiten Abschnitt 76 des weiteren Betätigungsmittelkanals 66 und in den ersten Abschnitt 70 des weiteren

Betätigungsmittelkanals 66. Von dem ersten Abschnitt 70 des weiteren Betätigungsmittelkanals 66 strömt das Betätigungsmittel 90 in den weiteren Kolbendruckraum 44. Von dem weiteren Kolbendruckraum 44 aus strömt das Betätigungsmittel 90 in den weiteren abgehenden Betätigungsmittelanschluss 69, welcher fluiddicht verschlossen ist.

Wenn der zweite weitere Kolbendruckraum 44a und der weitere Kolbendruckraum 44 mit unter Druck stehendem Betätigungsmittel 90 beaufschlagt sind, wirkt der Druck des Betätigungsmittels auf die Flächen des zweiten Kolbens 40a und des Kolbens 40. Übersteigt die Summe der Druckkraft, welche aufgrund des Drucks des Betätigungsmittels 90 auf die Flächen des zweiten Kolben 40a und des Kolbens 40 wirkt, und der Federkraft, welche durch die primäre Feder 80 und die sekundäre Feder 82 auf den Kolben 40 und durch die zweite primäre Feder 80a und die zweite sekundäre Feder 82 auf den zweiten Kolben 40a wirkt, die Kraft, die durch den dynamischen Druck des strömenden Mediums 22 auf das Sperrelement wirkt, so bewegen sich der Kolben 40 und der zweite Kolben 40a entlang der Wirkrichtung W2. Entsprechend bewegt sich das Sperrelement 14 entlang der Längsachse LA in Wirkrichtung W2 und der Medienkanal 60 schließt.

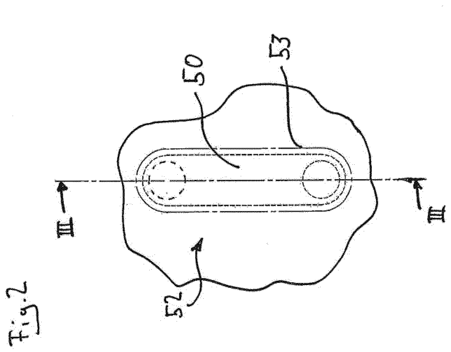

Figur 2 zeigt einen Teil des Gehäuses 32 um den Dichtbereich 52 herum. Dabei sind verdeckte Kanten, welche innerhalb des Gehäuses 32 liegen, durch unterbrochene Linien dargestellt.

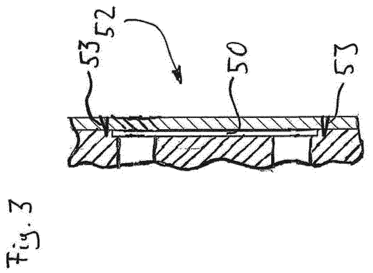

In Figur 3 ist der Dichtbereich 52 in einer Schnittdarstellung entlang der Linie III-III aus Figur 2 gezeigt.

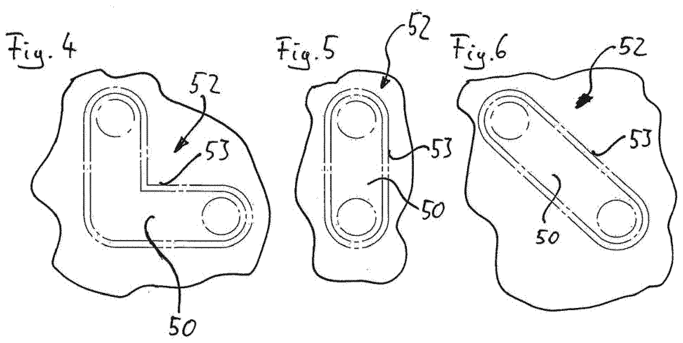

Der Abschnitt 50 des Betätigungsmittelkanals 46 kann verschiedenartig ausgebildet sein, was in den Figuren 4 bis 6, welche Darstellungen entsprechend Figur 2 für unterschiedliche geometrische Ausführungen des Abschnitts 50 des Betätigungsmittelkanals 46 zeigen, illustriert ist. Beispielsweise kann der Abschnitt 50 des Betätigungsmittel kann als 46 L-förmig, geradlinig und parallel zur Längsachse LA, oder schräg, also in einem Winkel >0° zur Längsachse LA verlaufen.

## Patentansprüche

1. Ventilantrieb (30) mit einem Gehäuse (32), welches ein erstes Gehäuseteil (34) und ein zweites Gehäuseteil (36), das in einem Kontaktbereich (38) an dem ersten Gehäuseteil (34) anliegt, umfasst, mit einem Kolben (40), dem ein Kolbendruckraum (42) zugeordnet ist und mit einem Betätigungsmittelkanal (46), der mit dem Kolbendruckraum (42) fluidisch verbunden ist, wobei mindestens ein erster Abschnitt (50) des Betätigungsmittelkanals (46) in dem Kontaktbereich (38) zwischen dem ersten Gehäuseteil (34) und dem zweiten Gehäuseteil (36) angeordnet ist, **dadurch gekennzeichnet, dass** um den ersten Abschnitt (50) des Betätigungsmittelkanals (46) ein, vorzugsweise linienartig ausgebildeter, Dichtbereich (52) angeordnet ist, in welchem das erste Gehäuseteil (34) und das zweite Gehäuseteil (36) fluiddicht und stoffschlüssig, insbesondere durch eine Laserschweißnaht (53), miteinander verbunden sind.

2. Ventilantrieb nach einem der Anspruch 1, **dadurch gekennzeichnet, dass** das zweite Gehäuseteil (36) wenigstens bereichsweise in einer radialen Richtung (R) gesehen um das erste Gehäuseteil (34) herum angeordnet ist.

3. Ventilantrieb nach einem oder mehreren der vorangegangenen Ansprüche, **dadurch gekennzeichnet, dass** das erste Gehäuseteil (34) und/oder das zweite Gehäuseteil (36) eine Ausnehmung (54), in welcher der erste Abschnitt (50) des Betätigungsmittelkanals (46) wenigstens bereichsweise verläuft, aufweist bzw. aufweisen, wobei die Ausnehmung (54) vorzugsweise geradlinig länglich gerade oder L-förmig ist.

4. Ventilantrieb nach Anspruch 3, **dadurch gekennzeichnet, dass** die Ausnehmung (54) zumindest auch durch ein zerspanendes Abtragen von Material hergestellt ist.

5. Ventilantrieb nach Anspruch 3 oder 4, **dadurch gekennzeichnet, dass** die Ausnehmung (54) zumindest auch durch ein plastisches Verformen von Material hergestellt ist.

6. Ventilantrieb nach einem oder mehreren der vorangegangenen Ansprüche, **dadurch gekennzeichnet, dass** ein zweiter Abschnitt (56) des Betätigungsmittelkanals (46) in dem ersten Gehäuseteil (34) oder in dem zweiten Gehäuseteil (36) angeordnet ist.

7. Ventilantrieb nach einem oder mehreren der vorangegangenen Ansprüche, **dadurch gekennzeichnet, dass** ein zweiter Abschnitt des Betätigungsmittelkanals (46), vorzugsweise in direktem Anschluss an den ersten Abschnitt (50) des Betätigungsmittelkanals (46), bereichsweise in radialer Richtung (R) verläuft.

8. Ventilantrieb nach einem oder mehreren der vorangegangenen Ansprüche, **dadurch gekennzeichnet, dass** ein weiterer Betätigungsmittelkanal (66) mit einem weiteren Kolbendruckraum (44) fluidisch verbunden, der Kolbendruckraum (42) dem Kolben (40) mit einer Wirkrichtung (W1) zugeordnet und der weitere Kolbendruckraum (44) dem Kolben (40) mit einer weiteren Wirkrichtung (W2) zugeordnet ist, die der Wirkrichtung (W1) entgegengesetzt ist.

9. Ventilantrieb nach einem oder mehreren der vorangegangenen Ansprüche, **dadurch gekennzeichnet, dass** der Kolben (40) durch eine Feder (80, 82) in eine Ausgangsposition vorgespannt ist.

10. Ventilantrieb nach einem oder mehreren der vorangegangenen Ansprüche, **dadurch gekennzeichnet, dass** der Ventilantrieb (30) derart ausgebildet ist, dass ein im Wesentlichen baugleicher zweiter Ventilantrieb (30a) mit einem zweiten Kolben (40a) mit dem Ventilantrieb (30) derart verbindbar ist, dass der Kolben (40) und der zweite Kolben (40a) kinematisch verbunden sind.

11. Ventilantrieb nach Anspruch 10, **dadurch gekennzeichnet, dass** jeweils ein eingehender Betätigungsmittelanschluss (48) und ein abgehender Betätigungsmittelanschluss (49) vorgesehen und derart angeordnet sind, dass ein abgehender Betätigungsmittelanschluss (49a) des im Wesentlichen baugleichen zweiten Ventilantriebs (30a) mit dem eingehenden Betätigungsmittelanschluss (48) des Ventilantriebs (30) fluidisch verbunden ist, wenn der Ventilantrieb (30) und der zweite Ventilantrieb (30a) miteinander verbunden sind.

12. Ventilantrieb nach Anspruch 10 oder 11, **dadurch gekennzeichnet, dass** der Kolben (40) und der zweite Kolben (40a) derart ausgebildet sind, dass sie über eine Verbindungsspindel (88) miteinander verbindbar sind.

## Claims

1. A valve drive (30) comprising a casing (32) including a first casing part (34) and a second casing part (36) which abuts on said first casing part (38) in a contact region (38), and a piston (40) associated with a piston pressure chamber (42) and an operating medium duct (46) which is in fluidic communication with said piston pressure chamber (42), wherein at least a first portion (50) of said operating medium duct (46) is arranged in said contact region (38) between said first casing part (34) and said second casing part (36), **characterized in that,** around said first portion (50) of said operating medium duct (46), a preferably line-like sealing region (52) is arranged, in which said first casing part (34) and said second casing part (36) are connected to each other in a fluid-tight and materially integral manner, in particular by a laser weld seam (53).

2. The valve drive according to one of claims 1, **characterized in that** said second casing part (36) is arranged around said first casing part (34) at least in parts as viewed in a radial direction (R).

3. The valve drive according to one or more of the preceding claims, **characterized in that** said first casing part (34) and/or said second casing part (36) comprises a recess (54) in which said first portion (50) of said operating medium duct (46) extends at least partially, said recess (54) being preferably elongate in a straight manner or L-shaped.

4. The valve drive according to claim 3, **characterized in that** said recess (54) is produced at least partially by cutting removal of material.

5. The valve drive according to claim 3 or 4, **characterized in that** said recess (54) is produced at least partially by plastic deformation of material.

6. The valve drive according to one or more of the preceding claims, **characterized in that** a second portion (56) of said operating medium duct (46) is arranged in said first casing part (34) or in said second casing part (36).

7. The valve drive according to one or more of the preceding claims, **characterized in that** a second portion of said operating medium duct (46) extends partially in said radial direction (R), preferably in direct connection to said first portion (50) of said operating medium duct (46).

8. The valve drive according to one or more of the preceding claims, **characterized in that** a further operating medium duct (66) is in fluidic communication with a further piston pressure chamber (44), said piston pressure chamber (42) is associated with said piston (40) with a direction of action (W1), and said further piston pressure chamber (44) is associated with said piston (40) with a further direction of action (W2), which is opposite to said direction of action (W1).

9. The valve drive according to one or more of the preceding claims, **characterized in that** said piston (40) is biased into a starting position by a spring (80, 82).

10. The valve drive according to one or more of the preceding claims, **characterized in that** said valve drive (30) is formed such that a substantially identically constructed second valve drive (30a) having a second piston (40a) is connectable to said valve drive (30) such that said piston (40) and said second piston (40a) are kinematically connected.

11. The valve drive according to claim 11, **characterized in that**, in each case, an incoming operating medium port (48) and an outgoing operating medium port (49) are provided and are arranged such that an outgoing operating medium port (49a) of said substantially identical second valve drive (30a) is in fluidic communication with said incoming operating medium port (48) of said valve drive (30) when said valve drive (30) and said second valve drive (30a) are connected to each other.

12. The valve drive according to claim 11 or 12, **characterized in that** said piston (40) and said second piston (40a) are formed such that they can be connected to one another via a connecting spindle (88).

## Revendications

1. Commande de soupape (30) comprenant un boîtier (32), lequel comporte une première partie de boîtier (34) et une deuxième partie de boîtier (36) qui s'applique contre la première partie de boîtier (34) dans une zone de contact (38), un piston (40), auquel est associée une chambre de pression de piston (42) et un canal de milieu d'actionnement (46), qui est en liaison fluidique avec la chambre de pression de piston (42), au moins une première section (50) du canal de milieu d'actionnement (46) étant agencée dans la zone de contact (38) entre la première partie de boîtier (34) et la deuxième partie de boîtier (36), **caractérisée en ce qu'**une zone d'étanchéité (52), de préférence linéaire, est agencée autour de la première section (50) du canal de milieu d'actionnement (46), zone d'étanchéité dans laquelle la première partie de boîtier (34) et la deuxième partie de boîtier (36) sont reliées l'une à l'autre de manière étanche au fluide et par liaison de matière, en particulier par un cordon de soudure au laser (53) .

2. Commande de soupape selon la revendication 1, **caractérisée en ce que** la deuxième partie de boîtier (36) est agencée au moins par endroits autour de la première partie de boîtier (34), vu dans une direction radiale (R).

3. Commande de soupape selon l'une ou plusieurs des revendications précédentes, **caractérisée en ce que** la première partie de boîtier (34) et/ou la deuxième partie de boîtier (36) présentent un évidement (54) dans lequel la première section (50) du canal de milieu d'actionnement (46) s'étend au moins par endroits, l'évidement (54) étant de préférence droit de manière allongée et rectiligne ou en forme de L.

4. Commande de soupape selon la revendication 3, **caractérisée en ce que** l'évidement (54) est obtenu au moins également par enlèvement de copeaux de matière.

5. Commande de soupape selon la revendication 3 ou 4, **caractérisée en ce que** l'évidement (54) est obtenu au moins également par une déformation plastique de matériau.

6. Commande de soupape selon l'une ou plusieurs des revendications précédentes, **caractérisée en ce qu'**une deuxième section (56) du canal de milieu d'actionnement (46) est agencée dans la première partie de boîtier (34) ou dans la deuxième partie de boîtier (36).

7. Commande de soupape selon l'une ou plusieurs des revendications précédentes, **caractérisée en ce qu'**une deuxième section du canal de milieu d'actionnement (46) s'étend par endroits dans la direction radiale (R), de préférence dans le prolongement direct de la première section (50) du canal de milieu d'actionnement (46).

8. Commande de soupape selon l'une ou plusieurs des revendications précédentes, **caractérisée en ce qu'**un autre canal de milieu d'actionnement (66) est en liaison fluidique avec une autre chambre de pression de piston (42), la chambre de pression de piston (42) est associée au piston (40) avec une direction d'action (W) et l'autre chambre de pression de piston (44) est associée au piston (40) avec une autre direction d'action (W2) qui est opposée à la direction d'action (W1).

9. Commande de soupape selon l'une ou plusieurs des revendications précédentes, **caractérisée en ce que** le piston (40) est précontraint par un ressort (80, 82) dans une position de départ.

10. Commande de soupape selon l'une ou plusieurs des revendications précédentes, **caractérisée en ce que** la commande de soupape (30) est réalisée de telle manière qu'une deuxième commande de soupape (30a) de structure sensiblement identique et présentant un deuxième piston (40a) peut être reliée à la commande de soupape (30), de telle manière que le piston (40) et le deuxième piston (40a) sont reliés cinématiquement.

11. Commande de soupape selon la revendication 10, **caractérisée en ce qu'**un raccord entrant de milieu d'actionnement (48) et un raccord sortant de milieu d'actionnement (49) sont prévus et sont agencés de telle manière qu'un raccord sortant de milieu d'actionnement (49a) de la deuxième commande de soupape (30a) de structure sensiblement identique est en liaison fluidique avec le raccord entrant de milieu d'actionnement (48) de la commande de soupape (30), lorsque la commande de soupape (30) et la deuxième commande de soupape (30a) sont reliées l'une à l'autre.

12. Commande de soupape selon la revendication 10 ou 11, **caractérisée en ce que** le piston (40) et le deuxième piston (40a) sont réalisés de manière à pouvoir être reliés l'un à l'autre par une broche de liaison (88).
